# EUROPÄISCHE PATENTANMELDUNG

(11) **EP 2 168 783 A1**
(43) Veröffentlichungstag der Anmeldung: **31.03.2010**
(21) Anmeldenummer: 08016744.8
(22) Anmeldetag: 24.09.2008
(51) Int. Cl.: B42D 15/10, B29C 45/14, B32B 7/02, B41M 5/52

(54) **Verwendung einer Kunststoff-Folie im Farblaserdruck**

(71) Anmelder: Bayer MaterialScience AG, 51368 Leverkusen (DE)
(72) Erfinder: Tziovaras, Georgios, 42275 Wuppertal (DE); Yesildag, Mehmet-Cengiz, 51377 Leverkusen (DE); Künzel, Roland, 51381 Leverkusen (DE); Pophusen, Dirk, 51467 Bergisch Gladbach (DE); Pudleiner, Heinz, Dr., 47800 Krefeld (DE); Lindner, Manfred, 57589 Pracht (DE)

(57) **Zusammenfassung**

Die vorliegende Erfindung betrifft die Verwendung einer Kunststoff-Folie als bedruckbares Medium im Farblaserdruck, spezielle Kunststoff-Folien für den Einsatz im Farblaserdruck sowie deren Anwendung bei der Herstellung von Sicherheits- oder Wertdokumenten und Kunststoff-Formteilen.

## Beschreibung

Die vorliegende Erfindung betrifft die Verwendung einer Kunststoff-Folie als bedruckbares Medium im Farblaserdruck, spezielle Kunststoff-Folien für den Einsatz im Farblaserdruck sowie deren Anwendung bei der Herstellung von Sicherheits- oder Wertdokumenten und Kunststoff-Formteilen.

Farbig Bedruckte Kunststoff-Folien werden seit vielen Jahren in verschiedenen Sektoren der Industrie, wie z. B. Verpackung, Werbung, Signaltechnik, Kfz- Industrie u.a., eingesetzt. Der größte Teil dieser Folien wird jedoch durch analoge Drucktechniken, wie z. B. Offset- Druck, Tiefdruck oder Siebdruck, bedruckt. Je nach eingesetzter Kunststoff-Folie müssen die Folien für analoge Druckverfahren entsprechend vorbehandelt werden. So müssen z.B bei Polyolefin-Folien vor dem Bedrucken die Oberflächenenergie der Folie gesteigert werden, etwa durch Beflammung oder Plasmabehandlung. Zudem ist der Farbauftrag bei den analogen Druckverfahren reaktiv dick, so dass Lösungsmittel o.ä. Inhaltsstoffe nicht vollständig aus der Farbschicht entfernt werden und in der Farbe verbleiben können. Dadurch wird die Folienoberfläche angelöst oder angequollen.

Auch digitaler Druck auf Kunststoff-Folien hat sich im letzten Jahrzehnt entwickelt. Im Vergleich zu den analogen Verfahren ist der Farbauftrag beim Digitaldruck deutlich geringer. Für das digitale Bedrucken von Kunststoff-Folien wird derzeit üblicherweise das Inkjet-Verfahren verwendet. Inkjet-Tinten können die Verwendung ähnlicher Farbanbindungstechniken wie die analogen Drucktechniken ermöglichen, so dass diesen Tinten ebenfalls z.B. Lösungsmittel zugegeben. Hier existiert weiterhin die Problematik des oberflächlichen Anlösens und Anquellens der Kunststoff-Folie. Es wurden auch UV-härtende Inkjet-Farben entwickelt, welche unmittelbar nach dem Drucken mit UV-Licht ausgehärtet werden. Diese Farben haben ein gute Haftung auf Kunststofffolien, sind jedoch spröde. Weitere Inkjet- Systeme drucken zuerst einen Primer oder Katalysator auf die Folie und erst anschließend darauf die Tinte, wobei die Farben dann auf den Folien mit dem Primer oder durch den Katalysator zu einer festen Schicht reagieren. Diese Vorbehandlungen vor dem eigentlichen Drucken erfordern jedoch wenigstens einen zusätzlichen Schritt.

Ein weiteres bekanntes digitales Druckverfahren für Kunststoff-Folien ist der Transferdruck. Bei diesem Druckverfahren befinden sich die Farben auf Farbbändern und werden mittels Druck und Temperatur auf das Substrat übertragen. Der Transferdruck auf Folien eignet sich jedoch nicht für Folien, welche nachträglich unter Druck und Temperatur laminiert werden, da die Farbschicht dabei verlaufen würde.

Der Farblaserdruck ist den oben genannten Digitaldruckverfahren insbesondere in folgenden Punkten überlegen: Es wird eine sehr gute Druckqualität mit einer hoher Druckgeschwindigkeit kombiniert. Die Ausdrucke sind beständiger gegen Sonneneinstrahlung, was mit Tintenstrahldruckern nur bei Verwendung von Spezialtinten erreicht werden kann. Die Laser-Druckkosten sind erheblich niedriger, und die Lebenserwartung der Geräte deutlich höher als beispielsweise von Tintenstrahldruckern. Zudem können Laserdrucker längere Standzeiten überbrücken ohne dass eine Wartung nötig wäre, da kein Vertrocknen der Düsen, z.B. bei Tintenstrahldruckern, erfolgen kann. Toner für Laserdrucker weisen demgegenüber erheblich längere Lagerfähigkeit auf.

Es bestand demnach Bedarf an einem Farblaserdruckverfahren für Kunststoff-Folien als bedruckbare Medien, bei welchem die vorangehend genannten Nachteile nicht auftreten. Insbesondere bestand Bedarf an hierfür geeigneten, einfach herzustellenden Kunststoff-Folien, welche ohne vorherige Zusatzbehandlung mittels Farblaserdruck bedruckt werden können.

Die Aufgabe, die der vorliegenden Erfindung zugrunde lag, bestand demnach darin, Kunststoff-Folien für den Einsatz in einem solchen Farblaserdruckverfahren aufzufinden, die keiner vorherigen Zusatzbehandlung vor dem Bedrucken mehr bedürfen.

Überraschend wurde gefunden, dass sich Kunststoff-Folien aus einem thermoplastischen Kunststoff mit einem spezifischen Oberflächenwiderstand von 10⁵ bis 10¹⁴ Ω für die Verwendung als zu bedruckendes Medium im Farblaserdruck eignen.

Gegenstand der vorliegenden Erfindung ist daher die Verwendung einer Kunststoff-Folie aus einem thermoplastischen Kunststoff mit einem spezifischen Oberflächenwiderstand von 10⁵ bis 10¹⁴ Ω als zu bedruckendes Medium im Farblaserdruck.

Das Farblaserdruckverfahren im Allgemeinen funktioniert im Prinzip wie folgt: Eine mit Photoleiter beschichtete Bildtrommel oder Endlosband wird zunächst entweder mittels einer Ladekorona oder mittels Ladungswalzen elektrostatisch negativ aufgeladen. Anschließend wird die Ladung auf dem Photoleiter mittels Belichtung an den Stellen gelöscht, an denen später kein Toner auf die Trommel aufgetragen werden soll. Zur Belichtung wird ein Laserstrahl über einen rotierenden Spiegel (Laserscanner) zeilenweise auf die Trommel gelenkt und dabei rasterartig an- bzw. ausgeschaltet. Sobald der Photoleiter dann in der Entwicklereinheit in unmittelbare Nähe des elektrostatisch gegensätzlich zur Photoleiter aufgeladenen Toners gebracht wird, springt der Toner aufgrund der gegensätzlichen Ladung auf die Trommel über und haftet dort an. Der Photoleiter bringt dann den Toner in Kontakt entweder direkt mit dem zu bedruckenden Medium oder zunächst mit einer Transferwalze oder einem Transferband. Der Toner wird dann dazu gebracht, auf das zu bedruckende Medium überzuspringen, indem auf der Rückseite des zu bedruckenden Mediums mittels einer Transferrolle eine starke elektrische Ladung angelegt wird, die der Ladung des Toners entgegengesetzt ist. Das zu bedruckende Medium gelangt zur Fixiereinheit; welche im Wesentlichen zwei Hohlwalzen aufweist, die eine besondere Beschichtung tragen (z. B. Teflon oder Silikongummi). Im Inneren von mindestens einer der zwei Walzen befindet sich ein Heizstab, der die Walze derart aufheizt (z.B. auf bis zu ca. 180°C oder mehr), dass beim Durchlaufen des zu bedruckenden Mediums der Toner schmilzt und mit dem Medium verklebt. Die besondere Beschichtung der Walzen sowie gegebenenfalls eine entsprechende, leichte elektrostatische Aufladung der Walzen, die den Toner abstoßen (obere Walze) bzw. anziehen (untere Walze, jenseits des zu bedruckenden Mediums) sorgt dafür, dass möglichst wenig Toner an den Heizwalzen haften bleibt.

Unter Berücksichtigung dieses Prinzips ist es um so überraschender, dass sich Kunststoff-Folien mit einem spezifischen Oberflächenwiderstand von 10⁵ bis 10¹⁴ Ω für die Verwendung als zu bedruckendes Medium im Farblaserdruck eignen, da bei zu geringem spezifischen Oberflächenwiderstand und damit zu geringer elektrostatischer Aufladung des zu bedruckenden Mediums ein selektives Überspringen des Toners nicht mehr möglich sein sollte. Bei zu hohem spezifischem Oberflächenwiderstand und damit zu hoher elektrostatischer Aufladung des zu bedruckenden Mediums wird zudem ein fehlerhaftes Druckbild erhalten.

Bevorzugt eignen sich für die erfindungsgemäße Verwendung Kunststoff-Folien, die einen spezifischen Oberflächenwiderstand von 10⁷ bis 10¹³ Ω, bevorzugt von 10⁸ bis 10¹² Ω aufweisen.

Der spezifische Oberflächenwiderstand in Ω wird gemäß DIN IEC 93 bestimmt.

Bei dem thermoplastischen Kunststoff kann es sich bevorzugt um wenigstens einen thermoplastischen Kunststoff ausgewählt aus Polymerisaten von ethylenisch ungesättigten Monomeren und/oder Polykondensaten von bifunktionellen reaktiven Verbindungen handeln. Für bestimmte Anwendungen kann es vorteilhaft sein, einen transparenten thermoplastischen Kunststoff einzusetzen.

Besonders geeignete thermoplastische Kunststoffe sind Polycarbonate oder Copolycarbonate auf Basis von Diphenolen, der Poly- oder Copolyacrylate und Poly- oder Copolymethacrylate wie beispielhaft und vorzugsweise Polymethylmethacrylat, Poly- oder Copolymere mit Styrol wie beispielhaft und vorzugsweise transparentes Polystyrol oder Polystyrolacrylnitril (SAN), transparente thermoplastische Polyurethane, sowie Polyolefine, wie beispielhaft und vorzugsweise transparente Polypropylentypen oder Polyolefme auf der Basis von cyclischen Olefinen (z.B. TOPAS^{®}, Hoechst), Poly- oder Copolykondensate der Terephthalsäure, wie beispielhaft und vorzugsweise Poly- oder Copolyethylenterephthalat (PET oder CoPET), glycol-modifiziertes PET (PETG) oder Poly- oder Copolybutylenterephthalat (PBT oder CoPBT) oder Mischungen aus den vorangehend genannten.

Ganz besonders bevorzugt sind Polycarbonate oder Copolycarbonate, insbesondere mit mittleren Molekulargewichten M_{W} von 500 bis 100 000, bevorzugt von 10 000 bis 80 000, besonders bevorzugt von 15 000 bis 40 000 oder deren Blends mit wenigstens einem Poly- oder Copolykondensat der Terephthalsäure mit mittleren Molekulargewichten M_{W} von 10.000 bis 200.000, bevorzugt von 26.000 bis 120.000. In besonders bevorzugten Ausführungsformen der Erfindung handelt es sich bei dem Blend um einen Blend aus Polycarbonat oder Copolycarbonat mit Poly- oder Copolybutylenterephthalat. Bei einem solchen Blend aus Polycarbonat oder Copolycarbonat mit Poly- oder Copolybutylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat, vorzugsweise mit 1 bis 90 Gew.-% Polycarbonat und 99 bis 10 Gew.-% Polybutylenterephthalat handeln, wobei sich die Anteile zu 100 Gew.-% addieren. Besonders bevorzugt kann es sich bei einem solchen Blend aus Polycarbonat oder Copolycarbonat mit Polyoder Copolybutylenterephthalat um einen solchen mit 20 bis 85 Gew.-% Polycarbonat oder Copolycarbonat und 80 bis 15 Gew.-% Poly- oder Copolybutylenterephthalat, vorzugsweise mit 20 bis 85 Gew.-% Polycarbonat und 80 bis 15 Gew.-% Polybutylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat um einen solchen mit 35 bis 80 Gew.-% Polycarbonat oder Copolycarbonat und 65 bis 20 Gew.-% Polyoder Copolybutylenterephthalat, vorzugsweise mit 35 bis 80 Gew.-% Polycarbonat und 65 bis 20 Gew.-% Polybutylenterephthalat handeln, wobei sich die Anteile zu 100 Gew.-% addieren.

Eine solche besonders bevorzugte Kunststoff-Folie bei der es sich bei dem thermoplastischen Kunststoff um einen Blend wenigstens eines Polycarbonats oder Copolycarbonats und wenigstens eines Poly- oder Copolykondensats der Terephthalsäure handelt ist bisher im Stand der Technik nicht beschrieben und daher ebenfalls Gegenstand der vorliegenden Erfindung. Der thermoplastische Kunststoff einer solchen besonders bevorzugten Kunststoff-Folie weist eine niedrigere Glastemperatur T_{g(Blend)} als die Glastemperatur T_{g(Polycarbonat)} des unverblendeten Polyoder Copolycarbonats auf und die Folie zeigt besonders gute Bedruckbarkeit. Diese besonders gute Bedruckbarkeit einer solchen Folie mit verringerter Glastemperatur des thermoplastischen Kunststoffs ist um so überraschender als die thermische Belastung der Druckmedien aufgrund der hohen Fixiertemperaturen für die Verwendung von Kunststoff-Folien im Farblaserdruck eine besonders hohe thermische Belastbarkeit und Hitzefestigkeit erfordert und damit eher höhere Glastemperaturen von Vorteil sein sollten.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kemalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cylohexan, 1, 1-Bis-(4-hydroxyphenyl)-4-methyl-cylohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol oder

### Dihydroxydiphenylcycloalkane der Formel (Ia)

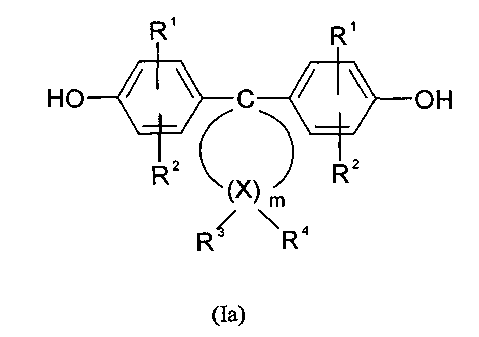

worin
- R¹ und R²: unabhängig voneinander Wasserstoff, Halogen, bevorzugt Chlor oder Brom, C₁- C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴: für jedes X individuell wählbar, unabhängig voneinander Wasserstoff oder C₁-C₆- Alkyl und
- X: Kohlenstoff bedeuten,
mit der Massgabe, dass an mindestens einem Atom X, R³ und R⁴ gleichzeitig Alkyl bedeuten. Bevorzugt sind in der Formel (Ia) an einem oder zwei Atom(en) X, insbesondere nur an einem Atom X R³ und R⁴ gleichzeitig Alkyl.

Bevorzugter Alkylrest für die Reste R³ und R⁴ in Formel (Ia) ist Methyl. Die X-Atome in alpha - Stellung zu dem Diphenylsubstituierten C-Atom (C-1) sind bevorzugt nicht dialkylsubstituiert, dagegen ist die Alkyldisubstitution in beta-Stellung zu C-1 bevorzugt.

Besonders bevorzugte Dihydroxydiphenylcycloalkane der Formenl (Ia) sind solche mit 5 und 6 Ring-C-Atomen X im cycloaliphatischen Rest (m = 4 oder 5 in Formel (Ia)), beispielsweise die Diphenole der Formeln (Ib) bis (Id),

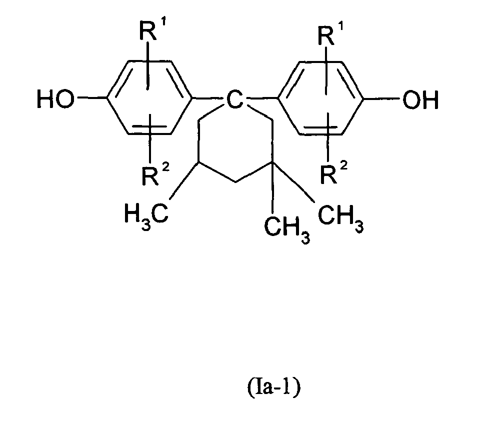

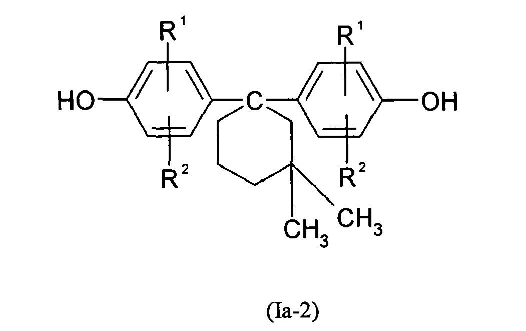

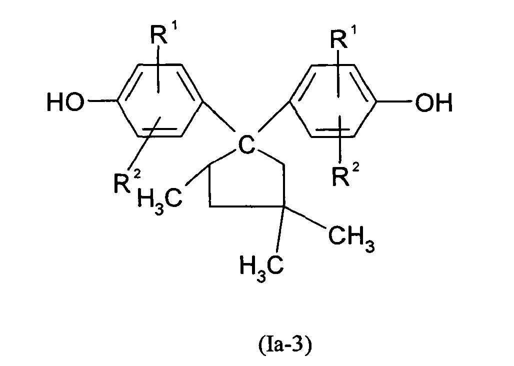

Ein ganz besonders bevorzugtes Dihydroxydiphenylcycloalkane der Formenl (Ia) ist 1,1-Bis-(4-hydroxyphenyl)-3,3,5-trimethyl-cyclohexan (Formel (Ia-1) mit R¹ und R² gleich H). Solche Polycarbonate können gemäss der EP-A 359 953 aus Dihydroxydiphenylcycloalkanen der Formel (Ia) hergestellt werden.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1, 1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl, 2,2-Bis-(4-hydroxyphenyl)-propan und 1,1-Bis-(4-hydroxyphenyl)-3,3,5-trimethyl-cyclohexan.

Es können sowohl eine Dihydroxyarylverbindung unter Bildung von Homopolycarbonaten als auch verschiedene Dihydroxyarylverbindungen unter Bildung von Copolycarbonaten verwendet werden. Es können sowohl eine Dihydroxyarylverbindung der Formel (I) oder (Ia) unter Bildung von Homopolycarbonaten als auch mehrere eine Dihydroxyarylverbindungen der Formel (I) und/oder (Ia) unter Bildung von Copolycarbonaten verwendet werden. Dabei können die verschiedenen Dihydroxyarylverbindungen sowohl statistisch als auch blockweise miteinander verknüpft sein. Im Falle von Copolycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol-% (Ia) zu 1 Mol-% (I) und 2 Mol-% (Ia) zu 98 Mol-% (I), vorzugsweise zwischen 99 Mol-% (Ia) zu 1 Mol-% (I) und 10 Mol-% (Ia) zu 90 Mol-% (I) und insbesondere zwischen 99 Mol-% (Ia) zu 1 Mol-% (I) und 30 Mol-% (Ia) zu 70 Mol-% (I).

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan Dihydroxyarylverbindungen der Formel (Ia) und (I) hergestellt werden.

Geeignete Kohlensäurederivate können beispielsweise Diarylcarbonate der allgemeinen Formel (II) sein, 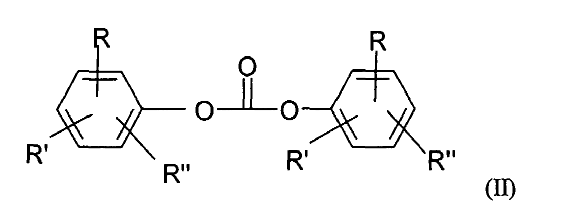 worin
- R, R' und R": unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R"' bedeuten kann, wobei R"' für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 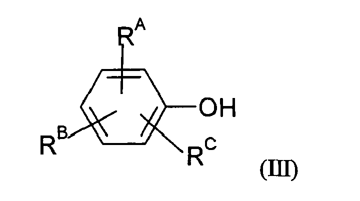 wobei
- R^{A}: für lineares oder verzweigtes C₁-C₃₄-Alkyl, C₇-C₃₄-Alkylaryl, C₆-C₃₄-Aryl oder für -COO- R^{D} steht, wobei R^{D} für Wasserstoff, lineares oder verzweigtes C₁-C₃₄-Alkyl, C₇-C₃₄- Alkylaryl oder C₆-C₃₄-Aryl steht, und
- R^{B}, R^{C}: unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Als Poly- oder Copolykondensate der Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste , bezogen auf die Dicarbonsäurekomponente, und mindestens 80 Mol-%, vorzugsweise mindestens 90 Mol-% Ethylenglykol- und/oder Butandiol-1,4-Reste, bezogen auf die Diolkomponente.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykol-Resten bis zu 20 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Vorzugsweise wird nicht mehr als 1 Mol-% des Verzweigungsmittels, bezogen auf die Säurekomponente, verwendet.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

Eine besonders bevorzugt für die erfindungsgemäße Verwendung geeignete Kunststoff-Folie ist eine solche mit einen Schichtaufbau umfassend wenigstens drei Schichten, wobei
(1) wenigstens eine innere Schicht aus einem thermoplastischen Kunststoff mit einer Glastemperatur T_{g(Innen)} und
(2) wenigstens eine untere und wenigstens eine obere Schicht (äußere Schichten) aus einem thermoplastischen Kunststoff mit einer Glastemperatur T_{g(Außen)}, welche niedriger ist als die Glastemperatur T_{g(Innen)},
wobei wenigstes die untere oder die obere Schicht, bevorzugt die untere und obere Schicht einen spezifischen Oberflächenwiderstand von 10⁵ bis 10¹⁴ Ω aufweisen.

Eine ganz besonders bevorzugt für die erfindungsgemäße Verwendung geeignete Kunststoff-Folie mit einem solchen Schichtaufbau umfasst drei Schichten, davon eine innere und jeweils eine untere und eine obere Schicht, unabhängig voneinander aus den vorangehend genannten thermoplastischen Kunststoffen.

Eine solche Kunststoff-Folie mit den vorangehend beschriebenen Schichtaufbauten ist bisher im Stand der Technik nicht beschrieben und daher ebenfalls Gegenstand der vorliegenden Erfindung. Eine solche Kunststoff-Folie zeigt überraschend gute Bedruckbarkeit und aufgrund der mittleren Schicht aus einem thermoplastischen Kunststoff mit einer höheren Glastemperatur T_{g(Innen)} zudem eine verbesserte thermische Belastbarkeit.

In diesen bevorzugten Schichtaufbauten der Kunststoff-Folie ist vorzugsweise die Glastemperatur T_{g(Außen)} mindestens 5°C niedriger, bevorzugt mindestens 10°C niedriger ist als die Glastemperatur T_{g(Innen)}.

Als thermoplastische Kunststoffe in diesen bevorzugten Schichtaufbauten kommen die vorangehend bereits beschriebenen in Frage. In bevorzugten Ausführungsformen einer solchen Kunststoff-Folie kann es sich bei dem thermoplastischen Kunststoff der unteren und der oberen Schicht um einen Blend wenigstens eines Polycarbonats oder Copolycarbonats und wenigstens eines Poly- oder Copolykondensats der Terephthalsäure handeln, ganz besonders bevorzugt um einen Blend aus Polycarbonat oder Copolycarbonat mit Poly- oder Copolybutylenterephthalat.

Der thermoplastische Kunststoff der erfindungsgemäß verwendeten Kunststoff-Folien kann in bevorzugten Ausführungsformen der vorliegenden Erfindung zur Erzielung des spezifischen Oberflächenwiderstandes beispielsweise ein Additiv ausgewählt aus tertiären oder quaternären, bevorzugt quaternären Ammonium- oder Phosphoniumsalzen einer teil- oder perfluorierten organischen Säure oder quaternären Ammonium- oder Phosphoniumhexafluorophosphaten, bevorzugt einer teil- oder perfluorierten Alkylsulfonsäure, vorzugsweise einer Perfluoralkylsulfonsäure enthalten.

Solche Additive und deren Verwendung als Antistatika sind in der Literatur beschrieben (vgl. DE-A 25 06 726, EP-A 1 290 106, EP 897 950 A2 oder US 6,372,829).

Als Anionen solcher erfindungsgemäß als Additive geeigneten Salze kommen beispielsweise bevorzugt teil- oder perfluorierte Alkylsulfonate, Cyanoperfluoralkansulfonylamide, Bis(cyano)perfluoralkylsulfonylmethide, Bis(perfluoralkylsulfonyl)imide, Bis(perfluoralkylsulfonyl)methide, Tris(perfluoralkylsulfonyl)methide oder Hexafluorophosphate in Frage. Besonders bevorzugt sind teil- oder perfluorierte Alkylsulfonate, ganz besonders bevorzugt Perfluoralkylsulfonate. Als Kationen solcher erfindungsgemäß als Additive geeigneten Salze kommen beispielsweise bevorzugt acylische oder cyclische tertiäre oder quaternäre Ammonium- oder Phosphoniumkationen. Als geeignete cyclische Kationen kommen beispielsweise Pyridinium, Pyridazidinium, Pyrimidiunium, Pyrazinium, Imidazolium, Pyrazolium, Thiazolium Oxazolim oder Thiazolium-Kationen in Frage. Als geeignete acyclischen Kationen kommen beispielsweise die in die folgende Formel (IV) integrierten in Frage.

Erfindungsgemäß besonders bevorzugt geeignete quarternäre Ammonium- oder Phosphoniumsalze einer Perfluoralkylsulfonsäure sind beispielsweise solche der allgemeinen Formel (IV)

R¹-SO₃ XR²R³R⁴R⁵ (IV)

in welcher
- X: N oder P, bevorzugt N bedeuten,
- R¹: teil- oder perfluorierte cyclische oder lineare, verzweigte oder unverzweigte Kohlenstoffketten mit 1 bis 30 Kohlenstoffatomen, bevorzugt 4 bis 8 Kohlenstoffatomen, im Falle der cyclischen Reste bevorzugt solche mit 5 bis 7 Kohlenstoffatomen,
- R²: unsubstituierte oder durch Halogen, Hydroxy, Cycloalkyl oder Alkyl, insbesondere durch C₁ bis C₃-Alkyl bzw.C₅ bis C₇-Cycloalkyl, substituierte, cyclische oder lineare, verzweigte oder unverzweigte Kohlenstoffketten mit 1 bis 30 Kohlenstoffatomen, bevorzugt 3 bis 10 Kohlenstoffatomen, im Falle cyclischer Reste bevorzugt solche mit 5 bis 7 Kohlenstoffatomen, besonders bevorzugt Propyl, 1 -Butyl, 1-Pentyl, Hexyl, Isopropyl, Isobutyl, tert-Butyl, Neopentyl, 2-Pentyl, Iso-Pentyl, Iso-Hexyl, Cyclohexyl, Cyclohexylmethyl und Cyclopentyl,
- R³, R⁴, R⁵: jeweils unabhängig voneinander unsubstituierte oder durch Halogen, Hydroxy, Cycloalkyl oder Alkyl, insbesondere durch C₁ bis C₃-Alkyl, bzw.C₅ bis C₇-Cycloalkyl, substituierte, cyclische oder lineare, verzweigte oder unverzweigte Kohlenstoffketten mit 1 bis 30 Kohlenstoffatomen, bevorzugt 1 bis 10 Kohlenstoffatomen, im Falle cyclischer Reste bevorzugt solche mit 5 bis 7 Kohlenstoffatomen, besonders bevorzugt Methyl, Ethyl, Propyl, 1-Butyl, 1-Pentyl, Hexyl, 1-Isopropyl, Isobutyl, tert-Butyl, Neopentyl, 2-Pentyl, Iso-Pentyl, Iso-Hexyl, Cyclohexyl, Cyclohexylmethyl und Cyclopentyl
bedeuten.

Eine bevorzugte Auswahl stellen dabei die Ammonium- oder Phosphoniumsalze dar in welchen
- X: N oder P, bevorzugt N bedeuten,
- R¹: perfluorierte lineare oder verzweigte Kohlenstoffketten mit 1 bis 30 Kohlenstoffatomen, bevorzugt 4 bis 8 Kohlenstoffatomen,
- R²: jeweils unabhängig voneinander halogenierte oder nichthalogenierte lineare oder verzweigte Kohlenstoffketten mit 1 bis 30 Kohlenstoffatomen, bevorzugt 3 bis 10 Kohlenstoffatomen besonders bevorzugt Propyl, I-Butyl, I-Pentyl, Hexyl, Isopropyl, Isobutyl, tert-Butyl, Neopentyl, 2-Pentyl, Iso-Pentyl, Iso-Hexyl,
- R³, R⁴, R⁵: jeweils unabhängig voneinander halogenierte oder nichthalogenierte lineare oder verzweigte Kohlenstoffketten mit 1 bis 30 Kohlenstoffatomen, bevorzugt 1 bis 10 Kohlenstoffatomen steht; besonders bevorzugt Methyl, Ethyl, Propyl, I-Butyl, I-Pentyl, Hexyl, Isopropyl, Isobutyl, tert-Butyl, Neopentyl, 2-Pentyl, Iso-Pentyl, Iso-Hexyl
bedeuten.

Bevorzugte geeignete quarternäre Ammonium- oder Phosphoniumsalze sind:
- Perfluoroctansulfonsäuretetrapropylammoniumsalz,
- Perfluorbutansulfonsäuretetrapropylammoniumsalz,
- Perfluoroctansulfonsäuretetrabutylammoniumsalz,
- Perfluorbutansulfonsäuretetrabutylammoniumsalz,
- Perfluoroctansulfonsäuretetrapentylammoniumsalz,
- Perfluorbutansulfonsäuretetrapentylammoniumsalz,
- Perfluoroctansulfonsäuretetrahexylammoniumsalz,
- Perfluorbutansulfonsäuretetrahexylammoniumsalz,
- Perfluorbutansulfonsäuretrimethylneopentylammoniumsalz,
- Perfluoroctansulfonsäuretrimethylneopentylammoniumsalz,
- Perfluorbutansulfonsäuredimethyldineopentylammoniumsalz,
- Perfluoroctansulfonsäuredimethyldineopentylammoniumsalz,
- N-Methyl-tripropylammoniumperfluorbutylsulfonat,
- N-Ethyl-tripropylammoniumperfluorbutylsulfonat,
- Tetrapropylammoniumperfluorbutylsulfonat,
- Diisopropyldimethylammoniumperfluorbutylsulfonat,
- Diisopropyldimethylammoniumperfluoroctylsulfonat,
- N-Methyl-tributylammoniumperfluoroctylsulfonat
- Cyclohexyldiethylmethylammoniumperfluoroctylsulfonat,
- Cyclohexyltrimethylammoniumperfluoroctylsulfonat,
sowie die entsprechenden Phosphoniumsalze. Bevorzugt sind die Ammoniumsalze.

Bevorzugt können auch ein oder mehrere der vorstehend genannten quartären Ammonium- oder Phosphoniumsalze, also auch Mischungen eingesetzt werden.

Ganz besonders geeignet ist das Perfluoroctansulfonsäuretetrapropylammoniumsalz, das Perfluoroctansulfonsäuretetrabutylammoniumsalz, das Perfluoroctansulfonsäuretetrapentylammoniumsalz, das Perfluoroctansulfonsäuretetrahexylammoniumsalz und das Perfluoroctansulfonsäuredimethyldiisopropylammoniumsalz sowie die entsprechenden Perfluorbutansulfonsäuresalze.

In einer ganz besonders bevorzugten Ausführungsform der Erfindung wird das Perfluorbutansulfonsäuredimethyldiisopropylammoniumsalz (Diisopropyldimethylammoniumperfluorbutylsulfonat) verwendet.

Die genannten Salze sind bekannt oder können nach bekannten Methoden hergestellt werden. Die Salze der Sulfonsäuren lassen sich beispielsweise durch Zusammengeben äquimolarer Mengen der freien Sulfonsäure mit der Hydroxyform des entsprechenden Kations in Wasser bei Raumtemperatur und Einengen der Lösung darstellen. Andere Herstellungsverfahren sind beschrieben z.B. in DE-A 1 966 931 und NL-A 7 802 830.

Die genannten Salze werden vorzugsweise in Mengen von 0.001 bis 2 Gew.%, bevorzugt von 0.1 bis 1 Gew.% den thermoplastischen Kunststoffen vor der Formgebung zur Kunststoff-Folie, welche zum Beispiel durch Extrusion oder Coextrusion erfolgen kann, zugegeben.

Den thermoplastischen Kunststoffen können auch weitere dem Fachmann bekannte und übliche Additive und Zusatzstoffe (z.B. Hilfs- und Verstärkungsstoffe) zugesetzt werden. Bei den erfindungsgemäß zu verwendenden Kunststoff-Folien kann es sich beispielsweise auch um gefüllte Kunststoff-Folien, d.h. mit Füllstoffen versetzte Kunststoff-Folien handeln.

Die erfindungsgemäß zu verwendenden Kunststoff-Folien weisen bevorzugt eine Dicke von 55 µm bis 750 µm, besonders bevorzugt von 100 µm bis 300 µm auf. In bevorzugten Ausführungsformen der Erfindung, in denen es sich bei der Kunststoff-Folie um einen Schichtaufbau umfassend wenigstens drei Schichten handelt, ist das Verhältnis der Schichtdicke der inneren Schicht bzw. der Gesamtschichtdicke gegebenenfalls mehrerer innerer Schichten zur Schichtdicke der unteren und oberen Schicht bzw. zur jeweiligen Gesamtschichtdicke gegebenenfalls mehrerer unterer und oberer Schichten 1 : 1 : 1 bis 20 : 1 : 1, bevorzugt 2 : 1 : 1 bis 5 : 1 : 1.

Die erfindungsgemäß zu verwendenden Kunststoff-Folien werden bevorzugt mittels Extrusion oder Coextrusion aus den gegebenenfalls additivierten thermoplastischen Kunststoffen hergestellt. Eine weitere Nachbehandlung, beispielsweise der Oberfläche, vor dem Einsatz dieser Kunststoff-Folien als zu bedruckendes Medium im Farblaserdruck ist nicht erforderlich. Damit wurde mit den erfindungsgemäß zu verwendenden Kunststoff-Folien ein Druckmedium für den Farblaserdruck gefunden, welches auf einfache Weise hergestellt werden kann.

Die erfindungsgemäß zu verwendenden Kunststoff-Folien lassen sich beispielsweise mit einer Auflösung von bis zu 600 dpi fehlerfrei bedrucken. Auch Auflösungen oberhalb von 600 dpi sind beim Einsatz der erfindungsgemäß zu verwendenden Kunststoff-Folien im Farblaserdruck möglich.

Gegenstand der Erfindung ist weiterhin ein Verfahren zum Bedrucken einer Kunststoff-Folie mittels Farblaserdruck, **dadurch gekennzeichnet, dass** als bedruckbares Medium eine der vorangehend beschriebenen Kunststoff-Folien aus einem thermoplastischen Kunststoff mit einem spezifischen Oberflächenwiderstand von 10⁵ bis 10¹⁴ Ω eingesetzt wird.

Eine gemäß dem vorangehend genannten Verfahren bedruckte Folie eignet sich aufgrund ihres qualitativ hochwertigen Druckbildes beispielsweise besonders gut für den Einsatz zur Herstellung von Sicherheits- oder Wertdokumenten, besonders bevorzugt personalisierten Sicherheitsdokumenten, oder Kunststoff-Formteilen, besonders bevorzugt solchen Kunststoff-Formteilen mit dekorativem Aufdruck.

Gegenstand der vorliegenden Erfindung ist daher weiterhin ein Sicherheits- oder Wertdokument, bevorzugt personalisiertes Sicherheitsdokument, oder Kunststoff-Formteil enthaltend eine mittels erfindungsgemäßem Verfahren bedruckte Kunststoff-Folie.

Sicherheits- oder Wertdokumente, insbesondere personalisierte Sicherheitsdokumente wie z.B. ID-Karten weisen häufig einen Schichtverbund enthaltend eine mittels erfindungsgemäßem Verfahren bedruckte Kunststoff-Folie auf, der anschließend zu einem festen Verbund laminiert wird. Dies dient unter anderem dem austausch- und fälschungssicheren Platzieren der personalisierten Informationen und Sicherheitsmerkmale in dem entsprechenden Dokument.

Gegenstand der vorliegenden Erfindung ist daher weiter ein Verfahren zur Herstellung eines Sicherheits- oder Wertdokuments, bevorzugt eines personalisierten Sicherheitsdokuments, **dadurch gekennzeichnet, dass** ein Schichtverbund enthaltend eine mittels erfindungsgemäßem Verfahren bedruckte Kunststoff-Folie laminiert wird.

Kunststoff-Formteile können ebenfalls einen Schichtverbund enthaltend eine mittels erfindungsgemäßem Verfahren bedruckte Kunststoff-Folie, welcher nachträglich thermisch verformt und gegebenenfalls noch mit einem weiteren thermoplastischen Kunststoff hinterspritzt wird.

Gegenstand der vorliegenden Erfindung ist daher weiter ein Verfahren zur Herstellung eines Kunststoff-Formteils, **dadurch gekennzeichnet, dass** ein Schichtverbund enthaltend eine mittels erfindungsgemäßem Verfahren bedruckte Kunststoff-Folie oder eine mittels erfindungsgemäßem Verfahren bedruckte Kunststoff-Folie thermisch verformt und gegebenenfalls anschließend mit einem thermoplastischen Kunststoff hinterspritzt wird.

Die erfindungsgemäß zu verwendende Folie zeigt hier insbesondere den Vorteil eines auch bei dieser thermischen Nachbehandlung mittels Laminieren oder thermischen Verformen und gegebenenfalls Hinterspritzen die Qualität des Druckbildes nicht beeinträchtigt wird. Damit geht bei Sicherheits- oder Wertdokumenten der Informationsgehalt und die Funktion der Sicherheitsmerkmale nicht verloren und die Kunststoff-Formteile verlieren nicht an dekorativer Qualität.

Die folgenden Beispiele diesen der exemplarischen Erläuterung der Erfindung und sind nicht als Beschränkung aufzufassen.

### Beispiele

Der spezifische Oberflächenwiderstand in Ω wurde gemäß DIN IEC 93 bestimmt. Die Rauhigkeit wurde gemäß der Norm ISO 4288 bestimmt.

### Beispiel 1

Es wurde eine Polycarbonatfolie der Dicke 250 µm auf Basis Polycarbonat Makrolon 3108^{®} der Bayer MaterialScience AG und Perfluoroctansulfonsäuretetraethylammoniumsalz (Bayowet 248^{®} der Bayer MaterialScience AG) als Additiv mit einer Zusammensetzung von 98,5% Makrolon 3108^{®} und 1,5 % Bayowet 248^{®} bei einer Massetemperatur von 280°C mittels Extrusion hergestellt. Der spezifische Oberflächenwiderstand der Folie wurde gemäß DIN IEC 93 (Ω) bestimmt und betrug 6.0 10¹² Ω.

Ein DIN-A 4 Folienmuster dieser Folie wurde mit einem Farblaserdrucker der Firma HP bedruckt (Model des Druckers: HP Colour Laserjet 4500 DN). Die Folie wurde auf der Seite mit der Nummer 2 bedruckt. (Rauhigkeit R3z < 9 µm).

### Druckmuster: Vollflächiger 4 Farben-Druck

Auflösung des Druckmusters: 600 dpi.

Die Folie ließ sich einwandfrei bedrucken und zeigte ein fehlerfreies Druckbild.

### Beispiel 2

Ein weiteres DIN-A 4 Folienmuster der wie in Beispiel 1 beschrieben hergestellten Folie wurde mit einem Farblaserdrucker der Firma HP bedruckt (Model des Druckers: HP Colour Laserjet 4500 DN). Die Folie wurde auf der Seite mit der Nummer 2 bedruckt. (Rauhigkeit R3z < 9 µm).

### Druckmuster: Vollflächiger 4 Farben-Druck

Auflösung des Druckmusters: 600 dpi.

Die Folie ließ sich einwandfrei bedrucken und zeigte ein fehlerfreies Druckbild.

Die Folie wurde zwecks Kontrastverstärkung mittels Siebdruck auf das digital bedruckte Druckmuster mit weißer Farbe (Noriphan HTR weiss 945 von der Firma Pröll) bedruckt. Die Folie wurde anschließend mittels HPF (High Pressure Forming) auf einer Verformungsmaschine der Firma Niebling, Model SAMK 360 verformt. Die überstehenden Folienreste wurden abgestanzt, so dass das geformte Folienstück genau in die Kavität eines entsprechenden Spritzgusswerkzeugs passte. Das geformte Folienstück wurde mit Bayblend^{®} T65 hinterspritzt.

Das Druckbild im fertigen Formteil zeigte hiervon keine Beeinträchtigung.

### Beispiel 3

Ein weiteres DIN-A 4 Folienmuster der wie in Beispiel 1 beschrieben hergestellten Folie wurde mit einem Farblaserdrucker der Firma HP bedruckt (Model des Druckers: HP Colour Laserjet 4500 DN). Die Folie wurde auf der Seite mit der Nummer 2 bedruckt. (Rauhigkeit R3z < 9 µm).

### Druckmuster: Vollflächiger 4 Farben-Druck

Auflösung des Druckmusters: 600 dpi.

Die Folie ließ sich einwandfrei bedrucken und zeigte ein fehlerfreies Druckbild.

Die bedruckte Folie wurde zwischen zwei weitere Folien auf Basis Polycarbonat Makrolon 3108^{®} der Bayer MaterialScience AG, gelegt. Der Folienstapel wurde in eine Laminierpresse der Firma Bürkle gelegt und unter Druck und Temperatur laminiert. Laminiert wurde mit folgenden Parametern:
Temperatur: 175°C
Niedriger Vordruck während der Aufwärmzeit: 15 N/cm²
Aufwärmdauer: 8 Minuten.
Hoher Druck während der Laminierung: 300 N/cm²
Laminierdauer: 2 Minuten.

Anschließend wurde Abkühlung der Presse eingeleitet. Abgekühlt wurde unter anhaltender Druckbeaufschlagung. Bei erreichen einer Temperatur von 38°C öffnete die Presse.

Aus dem laminierten Bogen wurden Karten gestanzt welche die Massen einer Karte nach ISO 7810 hatten.

Das Druckbild in der laminierten Karte zeigte keinerlei Beeinträchtigung.

### Vergleichsbeispiel 1

Ein DIN-A 4 Folienmuster einer mit Indium-Zinn-Oxid (ITO) beschichteten Polycarbonat-Folie mit einem Oberflächenwiderstand von 2 · 10³ Ω (bestimmt gemäß DIN IEC 93) wurde mit einem Farblaserdrucker der Firma HP bedruckt (Model des Druckers: HP Colour Laserjet 4500 DN). Die Folie wurde auf der ITO beschichteten Seite bedruckt.

### Druckmuster: Vollflächiger 4 Farben-Druck

Auflösung des Druckmusters: 600 dpi.

Die Folie ließ sich kaum bedrucken und zeigte nahezu kein Druckbild.

### Vergleichsbeispiel 2

Ein DIN-A 4 Folienmuster einer Polycarbonat-Folie mit einem Oberflächenwiderstand von 10¹⁶ Ω (bestimmt gemäß DIN IEC 93) wurde mit einem Farblaserdrucker der Firma HP bedruckt (Model des Druckers: HP Colour Laserjet 4500 DN). Die Folie wurde auf der Seite mit der Nummer 2 bedruckt. (Rauhigkeit R3z < 9 µm).

### Druckmuster: Vollflächiger 4 Farben-Druck

Auflösung des Druckmusters: 600 dpi.

Die Folie ließ sich bedrucken, zeigte jedoch ein fehlerhaftes, streifiges Druckbild.

## Patentansprüche

1. Verwendung einer Kunststoff-Folie aus einem thermoplastischen Kunststoff mit einem spezifischen Oberflächenwiderstand von 10⁵ bis 10¹⁴ Ω als zu bedruckendes Medium im Farblaserdruck.

2. Verwendung gemäß Anspruch 1, **dadurch gekennzeichnet, dass** die Kunststoff-Folie einen spezifischen Oberflächenwiderstand von 10⁷ bis 10¹³ Ω, bevorzugt von 10⁸ bis 10¹² Ω aufweist.

3. Verwendung gemäß Anspruch 1 oder 2, **dadurch gekennzeichnet, dass** es sich bei dem thermoplastischen Kunststoff um wenigstens einen thermoplastischen Kunststoff ausgewählt aus Polymerisaten von ethylenisch ungesättigten Monomeren und/oder Polykondensaten von bifunktionellen reaktiven Verbindungen handelt.

4. Verwendung gemäß wenigstens einem der Ansprüche 1 bis 3, **dadurch gekennzeichnet, dass** es sich bei dem thermoplastischen Kunststoff um ein oder mehrere Polycarbonat(e) oder Copolycarbonat(e) auf Basis von Diphenolen, Poly- oder Copolyacrylat(e) und Poly- oder Copolymethacrylat(e), Poly- oder Copolymer(e) mit Styrol, Polyurethan(e), sowie Poly-olefm(e), Poly- oder Copolykondensat(e) der Terephthalsäure oder Mischungen aus diesen handelt.

5. Verwendung gemäß wenigstens einem der Ansprüche 1 bis 4, **dadurch gekennzeichnet, dass** es sich bei dem thermoplastischen Kunststoff um einen Blend wenigstens eines Polycarbonats oder Copolycarbonats und wenigstens eines Poly- oder Copolykondensats der Terephthalsäure handelt.

6. Verwendung gemäß wenigstens einem der Ansprüche 1 bis 5, **dadurch gekennzeichnet, dass** es sich bei der Kunststoff-Folie um eine solche mit einen Schichtaufbau umfassend wenigstens drei Schichten handelt, wobei
(1) wenigstens eine innere Schicht aus einem thermoplastischen Kunststoff mit einer Glastemperatur T_{g(Innen)} und
(2) wenigstens eine untere und eine obere Schicht (äußere Schichten) aus einem thermoplastischen Kunststoff mit einer Glastemperatur T_{g(Außen)}, welche niedriger ist als die Glastemperatur T_{g(Innen)},
wobei wenigstens die untere oder die obere Schicht den in Anspruch 1 oder 2 genannten spezifischen Oberflächenwiderstand aufweisen.

7. Verwendung gemäß Anspruch 6, **dadurch gekennzeichnet, dass** die Glastemperatur T_{g(Außen)} mindestens 5°C niedriger, bevorzugt mindestens 10°C niedriger ist als die Glastemperatur T_{g(Innen)}.

8. Verwendung gemäß Anspruch 6 oder 7, **dadurch gekennzeichnet, dass** es sich bei dem thermoplastischen Kunststoff der unteren und der oberen Schicht um einen Blend wenigstens eines Polycarbonats oder Copolycarbonats und wenigstens eines Poly- oder Copolykondensats der Terephthalsäure handelt.

9. Verwendung gemäß wenigstens einem der Ansprüche 1 bis 8, **dadurch gekennzeichnet, dass** der thermoplastische Kunststoff zur Erzielung des spezifischen Oberflächenwiderstandes ein Additiv ausgewählt aus quaternären Ammonium- oder Phosphoniumsalzen einer teil- oder perfluorierten organischen Säure oder quaternären Ammonium- oder Phosphoniumhexafluorophosphaten enthält.

10. Kunststoff-Folie aus einem thermoplastischen Kunststoff mit einem spezifischen Oberflächenwiderstand von 10⁵ bis 10¹⁴ Ω, **dadurch gekennzeichnet, dass** es sich bei dem thermoplastischen Kunststoff um einen Blend wenigstens eines Polycarbonats oder Copolycarbonats und wenigstens eines Poly- oder Copolykondensats der Terephthalsäure handelt.

11. Kunststoff-Folie aus einem thermoplastischen Kunststoff mit einem spezifischen Oberflächenwiderstand von 10⁵ bis 10¹⁴ Ω, **dadurch gekennzeichnet, dass** es sich bei der Kunststoff-Folie um eine solche mit einen Schichtaufbau umfassend wenigstens drei Schichten handelt, wobei
(1) wenigstens eine innere Schicht aus einem thermoplastischen Kunststoff mit einer Glastemperatur T_{g(Innen)} und
(2) wenigstens eine untere und wenigstens eine obere Schicht (äußere Schichten) aus einem thermoplastischen Kunststoff mit einer Glastemperatur T_{g(Außen)}, welche niedriger ist als die Glastemperatur T_{g(Innen)},
wobei wenigstens die untere oder die obere Schicht den genannten spezifischen Oberflächenwiderstand aufweisen.

12. Verfahren zum Bedrucken einer Kunststoff-Folie mittels Farblaserdruck, **dadurch gekennzeichnet, dass** als bedruckbares Medium eine Kunststoff-Folie aus einem thermoplastischen Kunststoff mit einem spezifischen Oberflächenwiderstand von 10⁵ bis 10¹⁴ Ω eingesetzt wird.

13. Sicherheits- oder Wertdokument, bevorzugt personalisiertes Sicherheitsdokument, oder Kunststoff-Formteil enthaltend eine bedruckte Kunststoff-Folie erhältlich nach dem Verfahren gemäß Anspruch 12.

14. Verfahren zur Herstellung eines Sicherheits- oder Wertdokuments, bevorzugt eines personalisierten Sicherheitsdokuments, **dadurch gekennzeichnet, dass** ein Schichtverbund enthaltend eine bedruckte Kunststoff-Folie erhältlich nach dem Verfahren gemäß Anspruch 12 laminiert wird.

15. Verfahren zur Herstellung eines Kunststoff-Formteils, **dadurch gekennzeichnet, dass** ein Schichtverbund enthaltend eine bedruckte Kunststoff-Folie erhältlich nach dem Verfahren gemäß Anspruch 12 oder eine bedruckte Kunststoff-Folie erhältlich nach dem Verfahren gemäß Anspruch 12 thermisch verformt und gegebenenfalls anschließend mit einem thermoplastischen Kunststoff hinterspritzt wird.
